# EUROPEAN PATENT SPECIFICATION

(11) **EP 4 549 336 B1**
(45) Date of publication and mention of the grant of the patent: **08.04.2026**
(21) Application number: 23207271.0
(22) Date of filing: 01.11.2023
(51) Int. Cl.: B65D 77/06, F16K 1/44, F16K 15/14, F16K 15/18

(54) **VALVE ASSEMBLY**
VENTILANORDNUNG
ENSEMBLE SOUPAPE

(43) Date of publication of application: 07.05.2025
(73) Proprietor: LB Europe Limited, London Greater London W1W 5PF (GB)
(72) Inventor: DARBY,, Ian, Countesthorpe, LE8 5UB (GB)
(74) Representative: Potter Clarkson

(56) References cited:
- WO-A1-2005/012124
- WO-A1-2014/072979
- WO-A1-2022/269244
- US-A1- 2023 182 961

## Description

### Field

The present disclosure relates to a valve assembly, and in particular to a valve assembly that has a movable plunger that can open and close the valve assembly for fluid flow.

### Background

Liquids, such as beverages, can be provided in bags that have a valve assembly built into them. When it is required to dispense the liquid from the bag, a lineside connector can be connected to the valve assembly such that liquid can flow out of the bag.

WO 2005/012124 (A1) discloses a dosing device for a flexible recipient comprising a reclosable stopper for cosmetic products.

### Summary

According to a first aspect of the present disclosure as defined in claim 1 there is provided a valve assembly comprising a valve body and a plunger, wherein:
the valve body comprises a cylindrical wall and an internal opening comprising a mechanical detent portion;
the plunger comprises:
   a primary seal portion for engaging with the mechanical detent portion to occlude the internal opening; and
   a secondary radial seal portion for engaging around an inner surface of the cylindrical wall,
wherein the plunger comprises the following operational positions with respect to the valve body:
a transit seal position in which:
   the primary seal portion of the plunger is engaged with the mechanical detent portion to occlude the internal opening; and
an operational position in which:
   the primary seal portion of the plunger is disengaged from the mechanical detent portion such that fluid can flow through the internal opening; and
   the secondary radial seal portion is configured to switch between:
      an operational seal position in which the secondary radial seal portion is engaged around the inner surface of the cylindrical wall; and
      an operational flow position in which the secondary radial seal portion is at least partially disengaged from the inner surface of the cylindrical wall enabling fluid flow past the secondary radial seal portion.

By providing the secondary radial seal portion as a radial seal, a diameter of a secondary fluid seal can be maximised advantageously allowing for maximum possible fluid flow rate.

The secondary radial seal portion may be configured to switch from the operational seal position to the operational flow position in response to a pressure differential applied across the valve assembly.

The secondary radial seal portion may be configured to switch from the operational flow position to the operational seal position in response to a removal of the pressure differential.

The cylindrical wall may be an outer wall of the valve body.

The secondary radial seal portion may be configured to deform to provide the operational flow position.

The secondary radial seal portion may be configured to return to an undeformed shape to provide the operational seal position.

The secondary radial seal portion may comprise one or more preferential deformation regions.

The secondary radial seal portion may comprise a plurality of radially extending ribs. The one or more preferential deformation regions may comprise regions between the radially extending ribs.

The one or more preferential deformation regions may comprise one or more corresponding grooves at a circumferential edge of the secondary radial seal portion.

A diameter of the secondary radial seal portion may be greater than an internal diameter of the cylindrical wall, when the secondary radial seal portion is in a relaxed state.

The secondary radial seal portion may be configured to compress against the internal surface of the cylindrical wall.

The valve assembly may be arranged for fluid flow from a proximal end of the valve assembly to a distal end of the valve assembly. The secondary radial seal portion may comprise an axially aligned truncated conical structure having a base defining a circumferential edge of the secondary radial seal portion that tapers towards a truncated apex, wherein the truncated conical structure is arranged with the truncated apex closer to the proximal end of the valve assembly than the base.

The valve body may comprise a boss for locating the plunger. The boss may comprise an axially extending internal wall comprising the mechanical detent portion.

The mechanical detent portion may comprise a rib extending radially inwards from the internal wall to define the internal opening.

The plunger may comprise an axially extending central cylindrical portion for locating within the axially extending internal wall. The primary seal portion may comprise a radial seal portion on a cylindrical surface of the central cylindrical portion.

The valve assembly may comprise a boss for locating the plunger. The boss may comprise one or more mechanical stop features for limiting an axial movement of the plunger.

The plunger may be configured to move from the transit seal position to the operational position in response to an axial force being applied to the plunger.

The axial force may be provided by connection of a lineside connector to the valve assembly.

The primary seal portion and/or the secondary radial seal portion may be made from a flexible material.

The plunger and the valve body may be made from the same material.

### Brief Description of the Drawings

One or more embodiments will now be described by way of example only with reference to the accompanying drawings in which:
Figure 1a shows a rack of four boxes which each have a drinks container inside;
Figure 1b shows a close-up view of the part of a box to which a lineside connector is connected;
Figure 2a shows a valve assembly according to an embodiment of the present disclosure in a disassembled state;
Figure 2b shows the valve assembly of Figure 2a in a transit seal position;
Figure 2c shows the valve assembly of Figure 2a in an operational seal position;
Figure 2d shows the valve assembly of Figure 2a in an operational flow position;
Figure 3a shows a first example sealing portion of a plunger of a valve assembly according to an embodiment of the present disclosure;
Figure 3b shows a second example sealing portion of a plunger of a valve assembly according to an embodiment of the present disclosure;
Figure 3c shows a third example sealing portion of a plunger of a valve assembly in a deformed state resulting from a pressure differential; and
Figure 3d shows a fourth example sealing portion of a plunger of a valve assembly according to an embodiment of the present disclosure.

### Detailed Description

Typically BiB (Bag in Box) installations are connected to a dispense line - where syrup in the BiB is transported to a dispense head. Typically, the dispense lines have a degree of microbial contamination, as they are multiuse, and cleaning is not an effective sterilization (i.e. cleaning reduces the microbial count but does not eliminate it).

Connecting a BiB to the dispense line (through the valve system) typically allows an open path from the line to the interior of the BiB. If there is an element of backflow or grow back through the valve, the BiB pack can become contaminated ultimately leading to a potential failure or reduction in product shelf life.

Users can potentially achieve significant advantages in terms of extending shelf life, or avoiding spoilage, if a valve system can prevent or mitigate the backflow / grow-back effects.

To reduce this potential failure route, the present disclosure provides a valve assembly for a BiB that includes a vacuum actuated fluid seal that allows product to flow from the BiB to the dispense line but prevents backflow, acting as a one-way valve. Such an arrangement can present challenges with regard to fluid flow rate during dispense because by definition a normally sealed valve increases the potential back pressure (therefore reducing flow) during dispense.

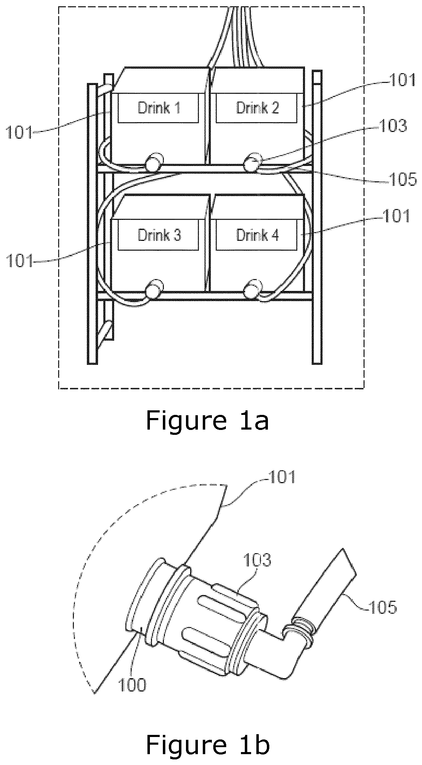

Figure 1a shows a rack of four boxes 101 which each have a drinks container inside that contains a liquid beverage. The drinks container in this example is a flexible bag. Each bag has a valve assembly, which is exposed through the box 101 so that it can be connected to a lineside connector 103 and pipework 105 for transporting the beverage from inside the bag to a point where it can be dispensed through a tap.

Figure 1b shows a close-up view of the part of a box 101 to which a lineside connector 103 is connected. Also visible in Figure 1b is part of the valve assembly 100, which will be described in detail below. In this example, the lineside connector 103 is screwed on to the valve assembly 100. The action of screwing on the lineside connector 103 can in some examples open both the valve assembly 100 (which can also be considered as a bag valve) and a lineside valve within the lineside connector 103. In some examples a pressure differential can be applied across the valve assembly 100 (by creating a vacuum in the pipework 105) in order to open the valve assembly such that liquid can flow out of the bag in the box 101. When the lineside connector 103 is unscrewed from the valve assembly 100 and / or when the pressure differential is removed, the lineside valve closes and the valve assembly 100 also closes prior to the lineside connector 103 being fully disconnected from the valve assembly 100.

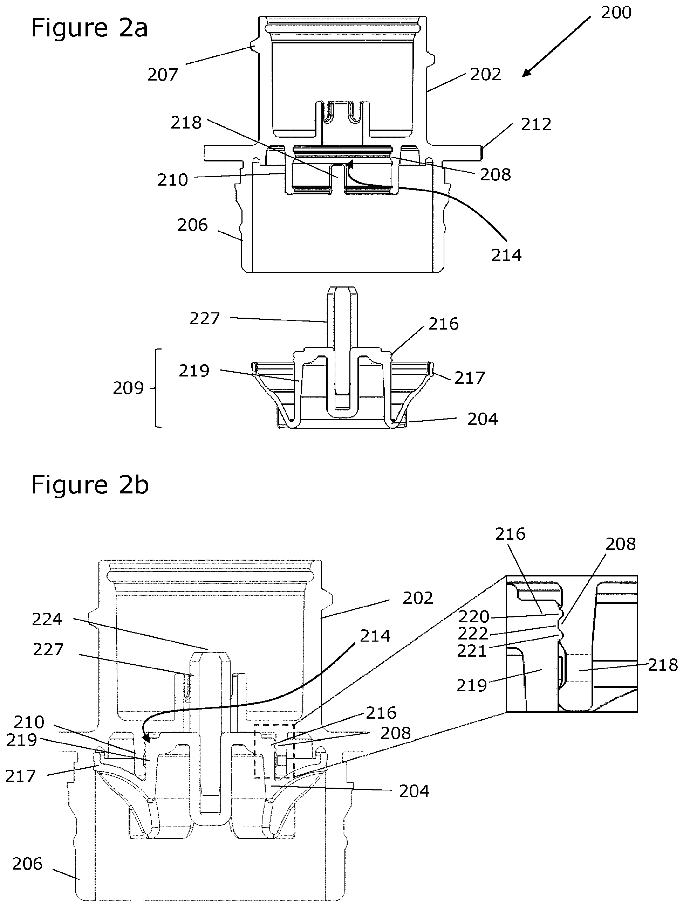

Figures 2a to 2d show a cross-sectional view through a valve assembly 200. The valve assembly 200 includes a valve body 202 and a plunger 204. Figure 2a shows a cross-sectional view through the valve assembly 200 with the valve body 202 and the plunger 204 separated. Figures 2b to 2d show a cross-sectional views through the valve assembly 200 with the valve body 202 and the plunger 204 assembled together with the plunger 204 in different positions with respect to the valve body 202.

The valve body 202 has a radially extending lip 212. When the valve assembly 200 is fitted to a bag or other container (not shown in Figures 2a-2d), the radially extending lip 212 can be located on the outer surface of the bag such that the portion of the valve assembly that is above the lip 212 (as it is shown in Figures 2a to 2d) is outside the bag, and the portion of the valve assembly that is below the lip 212 (as it is shown in Figures 2a to 2d) is inside the bag.

The valve assembly 200 may comprise a protective cap (not shown) fitted thereon. Such a cap can be connected to the valve assembly 200 when it is in transit to prevent the valve assembly 200 from inadvertently being opened and to keep the portion of the valve assembly 200 that is outside the bag clean. When the cap is removed, a distal portion of the plunger 204 is exposed. As discussed above, a lineside connector (not shown) can be connected to the valve assembly 200 to open the valve assembly 200. In this example the valve body 202 includes a threaded portion 207 so that the lineside connector (not shown) can be screwed onto the valve assembly 200. As will be appreciated from the description that follows, the lineside connector is shaped such that it will apply an external force to the distal end of the plunger 204 as it is attached to the valve assembly 200 in order to move the plunger 204.

The plunger 204 and the valve body 202 can be considered as having: a distal end (the upper end in Figures 2a to 2d) that is distal from a liquid supply (such as post mix syrup) that will be connected to the valve assembly 200; and a proximal end (the lower end in Figures 2a to 2d) that is proximal to the liquid supply. An axis from the distal end of the valve body 202 / plunger 204 to the proximal end of the valve body / valve plunger 204 defines an axial direction (vertical axis/direction in Figures 2a to 2d). The valve assembly 200 provides the functionality of a one-way valve, such that liquid can flow through the valve assembly 200 from the proximal end to the distal end of the valve assembly 200 (but not in the reverse direction), which has significant advantages from a microbiological point of view. This is because the valve assembly 200 prevents liquid from flowing back into the bag from the (potentially relatively dirty) pipework that is attached to the valve assembly 200.

The valve body 202 has a cylindrical wall 206 and an internal opening 214 comprising a mechanical detent portion 208. In some examples, the mechanical detent portion 208 may be considered as defining the internal opening 214.

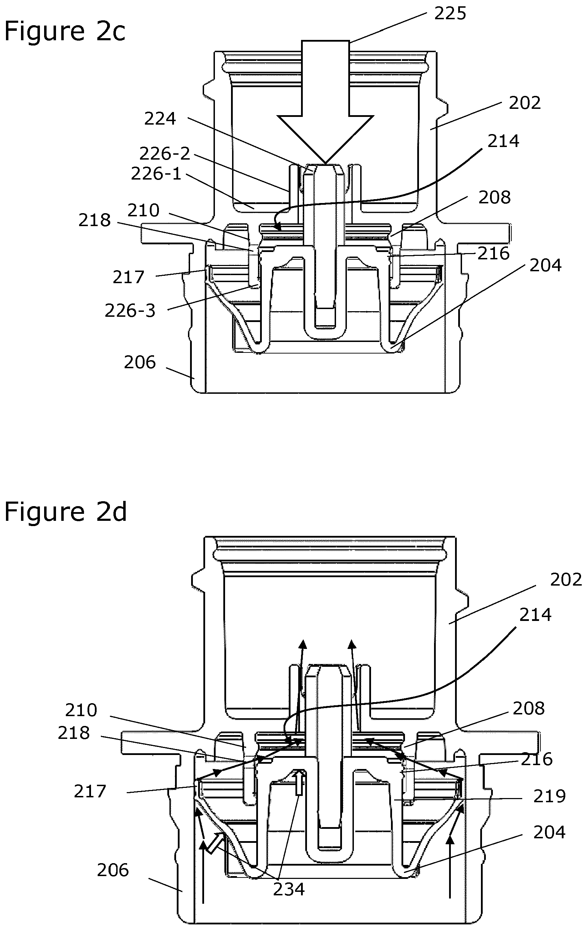

The plunger 204 may include a stem portion 227 and a sealing portion 209. The sealing portion 209 may comprise a primary seal portion 216 and a secondary radial seal portion 217. The primary seal portion 216 is configured to engage with the mechanical detent portion 208 of the valve body to occlude the internal opening 214 (as illustrated in Figure 2b) and provide a primary fluid seal for the valve assembly 200. In this example, the primary seal portion 216 comprises a radial seal that seats within the mechanical detent portion 208 to provide a radial interference fit. The secondary radial seal portion 217 is configured to engage around an inner surface of the cylindrical wall 206 (as illustrated in Figures 2b and 2c). The secondary radial seal portion 217 can engage around a circumference of the inner surface of the cylindrical wall to provide a secondary fluid seal for the valve assembly 200. In other words, the secondary radial seal portion 217 can occlude a fluid pathway defined by the cylindrical wall 206.

By providing the secondary fluid seal as a radial seal, a diameter of the secondary fluid seal can be maximised advantageously allowing for maximum possible fluid flow rate. In some examples, the cylindrical wall 206 may be an outer wall of the valve body 202 such that the diameter of the secondary radial seal portion 217 and the resulting secondary fluid seal is maximised. Maximising the diameter of the radial seal maximises the area over which the vacuum pressure (from the lineside) operates - the larger the area, the higher the available force and the higher the reseal force (compression force of the secondary radial seal portion 217 against the internal surface of the cylindrical wall 206) that can be used, without a corresponding high pressure drop or reduction in flow. Implementing such large diameter fluid seals for a vertical engaging seal relying on a spring mechanism can result in insufficient sealing pressure and a poor seal.

A radial seal can also advantageously provide a more consistent seal against microbial back flow. A radial seal can also result in an easier to manufacture valve assembly than a vertically engaging spring based mechanism, for example because a single piece (unitary) valve body 202 can be used because no vertically engaging opening is required.

In this example, the valve body 202 includes a boss for locating the plunger 204. In this example, the boss includes: (i) a radial flange 226-1 extending inwards from the cylindrical wall 206 (in a lateral direction that is perpendicular to the axial direction); (ii) axially extending internal cylindrical wall 210 (which may be referred to herein as internal wall 210) extending in an axial direction from the radial flange 226-1 towards the proximal end of the valve assembly 200; and (iii) a second axially extending internal cylindrical wall 226-2 (referred to herein as the second internal wall 226-2), extending in an axial direction from the radial flange 226-1 towards the distal end of the valve assembly 200. When the valve assembly is assembled, the stem 227 of the plunger is located within the second internal wall 226-2 and an axially extending central cylindrical portion 219 of the sealing portion 209 of the plunger is located within the internal wall 210.

Figure 2b illustrates the valve assembly in a transit seal position. In the transit seal position, the primary seal portion 216 of the plunger 204 engages with the mechanical detent portion 208 of the valve body 202 to occlude the internal opening 214. In this example, in the transit seal position, the secondary radial seal portion 217 of the plunger 204 is also fully engaged around the internal surface of the cylindrical wall 206 to provide the secondary fluid seal.

Figures 2c and 2d illustrate the valve assembly in an operational position following connection of the lineside connector. Figure 2c illustrates the valve assembly 200 in an operational seal position and Figure 2d illustrates the valve assembly 200 in an operational flow position.

In the operational seal position, as shown in Figure 2c, the primary seal portion 216 of the plunger 204 is disengaged from the mechanical detent portion 208 of the valve body 202. As a result, the internal opening 214 is no longer occluded and can provide a fluid flow path. Figure 2c shows how the plunger 204 and, in particular, the primary seal portion 216 has moved downwards, and away from the mechanical detent portion 208 of the internal opening 214 / valve body 202 that it was engaged with in the transit seal position (as shown in Figure 2b), such that there is a fluid flow path through the internal opening 214. This movement of the primary seal portion 216 of the plunger 204 relative to the valve body 202 may be caused by an external force that is applied to the plunger 204. As will described with reference to Figures 2b and 2c, connecting the lineside connector to the valve assembly 200 can provide the external force that opens the fluid flow path through the internal opening 214.

In the operational seal position, as illustrated in Figure 2c, the secondary radial seal portion 217 of the plunger 204 is engaged fully around the circumference of the inner surface of the cylindrical wall 206. In this way, the secondary radial seal portion 217 prevents fluid flow through the valve body 204 in the operational seal position, even though a fluid flow path is provided through the internal opening 214 due to the displacement of the primary seal portion 216.

In the operational flow position, as illustrated in Figure 2d, the secondary radial seal portion 217 of the plunger 204 is at least partially disengaged from the internal surface of the cylindrical wall 206 such that fluid can flow past the secondary radial seal portion 217. In this example, a pressure differential is applied across the valve assembly 200 by reducing the pressure in the pipework (e.g. by applying a vacuum) that is connected to the lineside of the valve assembly 200 (the upper end of the valve assembly 200 in Figures 2a to 2d). This pressure differential results in a force on the secondary radial seal portion 217 that is sufficient to deform at least a portion of the secondary radial seal portion 217 such that it disengages or moves away from the internal surface of the cylindrical wall 206. As shown in Figure 2d, in the operational flow position a fluid flow path is provided along a length of the valve assembly 200 / valve body 202. The fluid flow path comprises: (i) a fluid flow path past (around the outside of) at least a portion of the secondary radial seal portion 217 of the plunger 204; and (ii) through the internal opening 214 (in this example via cut-out portions 218 in the internal wall 210 as described below)).

In this way, in the operational flow position: the primary seal portion 216 of the plunger 204 remains disengaged from the mechanical detent portion 208 of the valve body 202; and the secondary radial seal portion 217 of the plunger 204 is at least partially disengaged from the cylindrical wall 206 by the pressure differential across the valve assembly 200. Further details will be provided below.

Figures 2b to 2d will now be described in more detail to further explain the transit seal position and the two states of the operational position.

Figure 2b illustrates the plunger 204 in the transit seal position. The plunger 204 is in the transit seal position such that the valve assembly 200 (and the bag of fluid to which it is attached) is suitable for transit. When the bag of fluid is in transit the valve assembly 200 is closed because access to the fluid in the bag will not be required.

In the same way as described above, the primary seal portion 216 of the plunger 204 is engaged with the mechanical detent portion 208 to occlude the internal opening 214. In this example, the primary seal portion 216 is positioned on an outer cylindrical surface of an axially extending central cylindrical portion 219 of the sealing portion 209 of the plunger 204. The primary seal portion 216 of the plunger 204 comprises a proximal transit seal lip 221; a distal transit seal lip 220 and a transit sealing region 222 between the proximal transit seal lip 221 and the distal transit seal lip 220. The proximal transit seal lip 221 and the distal transit seal lip 220 represent regions of the central cylindrical portion 219 / plunger 204 that have a greater radius than the transit sealing region 222. As shown in Figure 2b, the proximal transit seal lip 221 and the distal seal lip 220 are adjacent to the transit sealing region 222 in an axial direction. The proximal transit lip seal 221 is closer to the proximal end of the valve assembly 200 than the transit sealing region 222. The distal transit lip seal 220 is closer to the distal end of the valve assembly 200 than the transit sealing region 222.

In this example, the mechanical detent portion 208 of the valve body 202 comprises a rib, which extends radially inwards from the internal wall 210 to define the internal opening 214. When the valve assembly 200 is assembled the axially-aligned central cylindrical portion 219 of the sealing portion 209 of the plunger 204 is seated within the internal wall 210.

As shown in Figure 2b, when the plunger 204 is in the transit seal position, the rib of the mechanical detent portion 208 is located between (in an axial direction) the proximal transit seal lip 221 and the distal transit seal lip 220 of the plunger 204, such that it abuts the transit sealing region 222 of the plunger 204. In this way, the transit sealing region 222 can be considered as a circumferential groove around the plunger 204, that is in contact with the mechanical detent portion 208 of the valve body 202 in order to occlude the internal opening 214 when the valve assembly 200 is in the transit seal position. In this way, the primary seal portion 216 comprises a radial seal extending from the central cylindrical portion 219 of the plunger to provide a radial interference fit with the mechanical detent portion 208 on the internal wall 210 of the valve body 202. In another example, the mechanical detent portion 208 of the valve body 202 may not comprise a rib but instead may have a tapered surface that engages with the plunger 204 to selectively occlude the internal opening 214.

The mechanical detent portion 208 of the valve body 402 mechanically retains the plunger 204 in the transit seal position. The proximal transit seal lip 221 provides a corresponding detent that resists movement of the distal end of the plunger 204 towards the distal end of the valve body 202. The distal transit seal lip 220 provides a corresponding detent that resists movement of the distal end of the plunger 204 towards the proximal end of the valve body 202. As will be discussed in more detail below, the distal transit seal lip 220 is designed such that it can deform when a sufficient axial external force is applied to a distal end 224 of the plunger 204 such that the distal transit lip seal 220 can pass through the internal opening 214 (i.e. pass over, and disengage from, the mechanical detent portion 208) and thereby create a liquid flow path through the internal opening 214.

In this example, in the transit seal position of Figure 2b, the secondary radial seal portion 217 of the plunger 204 is engaged around the internal surface of the cylindrical wall 206. As discussed below, the secondary radial seal portion may be compressed against the internal surface of the cylindrical wall 206 because the secondary radial seal portion may be formed from a flexible material and have a nominal diameter that is greater than an internal diameter of the cylindrical wall 206.

Returning now to Figure 2c, the plunger 204 is shown in the lineside-attached position. In Figure 2c, the primary seal portion 216 of the plunger 204 is disengaged from the mechanical detent portion 208 of the valve body 202 such that fluid can flow through the internal opening 214. However, although the secondary radial seal portion 217 has been displaced in a proximal direction, the secondary radial seal portion 217 of the plunger 204 remains engaged around the cylindrical wall to inhibit fluid flow past the secondary radial seal portion 217. Therefore, the valve assembly 200 is still closed because there is not an open flow path through the internal opening 214 and past the secondary radial seal portion 217 of the plunger 204.

The plunger 204 transitions from the transit seal position to the operational seal position / lineside-attached position by an external force, which is shown schematically in Figure 2c as an arrow with reference number 225. This external force 225 is applied to the plunger 204 by a lineside connector (not shown) that is connected to the valve assembly 200, for instance using the threaded portion 207. The lineside connector exerts a force on the distal end / stem 227 of the plunger 204 as the lineside connector is attached to the valve body 202. The force applied to the distal end of the plunger 204 is transferred to an axial force on the primary seal portion 216. This axial force on the primary seal portion 216 causes the distal transit seal lip 220 (and / or the rib of the mechanical detent portion 208) to deform such that the distal transit lip seal 220 can pass through the internal opening 214 (i.e. the primary seal portion passes over and disengages from the mechanical detent portion 208). Once the distal transit lip seal 220 has passed through the internal opening 214 and passed over the mechanical detent portion 208, the primary seal portion 216 of the plunger 204 is spaced apart from the mechanical detent portion 208 such that fluid can flow through the internal opening 214.

In this example, when the primary seal portion 216 of the plunger 204 is disengaged or spaced apart from the mechanical detent portion 208, one or more cut-out portions 218 in the internal wall 210 provide a fluid flow path between a distal end of the secondary radial seal portion 217 and the internal opening 214. The one or more cut-out portions 218 in the internal wall 210 extend from a proximal side of the mechanical detent portion 208 towards a proximal end of the internal wall 210. In other words, the one or more cut-out portions 218 are closer to the proximal end of the valve body 202 than the mechanical detent portion 208. In this way, when the plunger 204 is in the operational position (as illustrated in Figures 2c and 2d) the primary seal portion 216 of the plunger 204 has been displaced towards the proximal end of the valve body 202 and fluid can flow through the cut-out portions 218 of the internal wall thereby opening a fluid path from the distal side of the secondary radial seal portion 217 through the internal opening 214. In some examples, the plunger 204 may comprise cut-out portions for providing the fluid flow path between the secondary radial seal portion 217 and the internal opening 214. The plunger cut-out portions may be in addition to, or instead of, the cut-out portions 218 of the internal wall 210.

Application of the external force 225, moves the plunger 204 and the sealing portion 209 towards the proximal end of the valve body 202 such that the plunger transitions from the transit seal position to the operational position. In this example, the valve body 202 includes mechanical stop features 226 to prevent the plunger 204 from moving too far towards the proximal end of the valve body 202.

In this example the mechanical stop features 226 include a line stop 226-1, 226-2 and a second mechanical detent portion 226-3. In this example, the line stop includes the radial flange 226-1 extending inwards from the cylindrical wall 206 to define a mechanical stop for a line of the lineside connector. The line stop also includes the second internal wall 226-2. The cylindrical central portion 219 of the plunger 204 resides within the internal wall 210 and the stem 227 of the plunger 204 resides within the second internal wall 226-2 in the transit and operational positions of the assembled valve assembly 200. In this way, the radial flange 226-1, the internal wall 210 and the second internal wall 226-2 provide the boss of the valve body for mating with / locating the plunger 204. When the lineside connector is attached, the connector pushes the plunger 204 through the boss towards the proximal end of the valve assembly 200 until the mechanical stops 226-1, 226-2, 226-3 prevent further movement.

In the transit seal position (figure 2b), a distal portion or stem 227 of the plunger 204 extends beyond a distal end of the second internal wall 226-2 in an axial direction towards the distal end of the valve assembly. When the lineside connector is attached, the connector applies a force on the stem 227 / distal end of the plunger 204 to move the plunger 204 in the axial direction towards the proximal end of the valve assembly such that the transit sealing region 222 of the plunger 204 overcomes the mechanical detent portion 208 of the valve body 202. With reference to Figure 2c, the plunger 204 moves until the distal end of the plunger 204 coincides with the distal end of the second internal wall 226-2 at which point the radial flange 226-1 and/or the second internal wall 226-2 prevent further axial movement of the lineside connector. As a result no further proximal force is applied to the plunger 204 and there is no further movement of the plunger 204 in the proximal direction. In this way, the mechanical stop features 226-1, 226-2 prevent the plunger 204 from moving too far into the valve body 202

In this example, the second mechanical detent portion 226-3 comprises a second rib extending inwards from the internal wall 210 at a proximal end of the internal wall 210. The primary seal portion 216 may engage with the second mechanical detent portion 226-2 in the same way as described above for the first mechanical detent portion 208. In this way, the second mechanical detent portion 226-3 provides an additional mechanical stop feature to prevent further movement of the plunger 204 in the proximal direction. The primary seal portion 216 may disengage from the second mechanical detent feature 226-3 by the application of an axial force, however the line stop 226-1, 226-2 prevents further proximal force being applied to the plunger 204 as described above. Advantageously, the use of the mechanical detent portion 208 and optionally the second mechanical detent portion 226-3 allows assembly of the valve assembly 200 by pushing the plunger 204 into the boss of the valve body 202 from the proximal end and applying an appropriate distal force for the primary seal portion 216 to overcome the second mechanical detent portion 226-3 and engage the mechanical detent portion 208.

Staying with Figure 2c with the plunger 204 in the lineside-attached / operational seal position, the secondary radial seal portion 217 of the plunger 204 is engaged around the internal surface of the cylindrical wall 206. In other words, the secondary radial seal portion 217 forms a circumferential seal with the cylindrical wall 206. In this way, fluid flow through the valve body 202 / valve assembly 200 is inhibited because no fluid can flow past the secondary radial seal portion 217. Therefore, when the lineside connector is connected to the valve assembly 200, a fluid flow path through the internal opening 214 is opened up (because the plunger 204 has been unseated from the transit seal position) but there is no fluid flow path past the secondary radial seal portion 217. In this way, the valve assembly 200 is still closed because no fluid can be extracted from the bag that is attached to the valve assembly 200.

In this example, the secondary radial seal portion 217 comprises an axially aligned truncated conical structure radially surrounding the central cylindrical portion 219 of the sealing portion 209 of the plunger 204. The central cylindrical portion 219 truncates the apex of the truncated conical structure. The truncated conical structure is arranged such that a base of the truncated conical structure forms a circumferential edge of the secondary radial seal portion 217 and the truncated conical structure tapers towards the truncated apex. The truncated apex is positioned closer to the proximal end of the plunger 204 than the base of the truncated conical structure. The truncated conical structure may be substantially conical in that the taper may be linear or may be curved (non-linear), as illustrated. The conical structure can advantageously aid deformation of the secondary radial seal portion 217 to disengage from the cylindrical wall, as discussed further below. The base / circumferential edge of the truncated conical structure can compress against the internal surface of the cylindrical wall 206 to provide the engagement and radial seal.

The secondary radial seal portion 217 may have a nominal diameter that is larger than a diameter of the cylindrical wall 206, when the secondary radial seal portion 217 is in a relaxed state (not flexed or compressed) and outside of the valve body 202. In this way, when the plunger 204 and valve body 202 are assembled together the secondary radial seal 217 can flex and compress against the internal surface of the cylindrical wall 206 to form a seal fully around the circumference of the cylindrical wall 206. The level of compression remains the same when the plunger transitions from the transit seal position (figure 2b) to the operational seal position (figure 2c) because the secondary radial seal portion 217 has only been displaced in an axial (proximal) direction.

The primary seal portion 216 and/or the secondary radial seal portion 217 may be made from a flexible / resilient material. Making the primary seal portion 216 from a flexible material enables the primary seal portion 216 to deform and engage / disengage from the mechanical detent portion 208 and the second mechanical detent portion 226-3. Making the secondary radial seal portion 217 from a flexible material enables the secondary radial seal portion to compress against the cylindrical wall 206 upon insertion as described above and also enables deformation of the secondary radial seal portion 217 to at least partially disengage from the cylindrical wall in the operational flow position as described below.

The primary seal portion 216 and the secondary radial seal portion 217 may be made from a polymer material, which may be a polyolefin such as polyethylene. The remainder of the plunger 204, such as the stem 227, and/or the valve body 202 may also be made from a polymer such as a polyolefin and in particular polyethylene. In some examples, the entire plunger 204, valve body 202 and/or valve assembly 200 may be made from the same material (i.e. mono-material). In some examples: the stem 227 of the plunger 204 may comprise high-density polyethylene (HDPE); the remainder of the plunger 204, i.e. the sealing portion 209 including the primary seal portion 216 and the secondary radial seal portion 217, may be made from a flexible low-density polyethylene (LDPE) material; and the valve body 202 may comprise HDPE.

Making the plunger 204 and/or the valve body 202 from a single material (which may include the same material at different densities such as HDPE and LDPE) can significantly increase the ease with which the valve assembly 200 can be recycled. Further still, the plunger 204 and/or valve body 202 can be made from the same material as the bag to which it is attached. This further increases the recyclability because the valve assembly 200 and the bag can be conveniently recycled together. For instance, the plunger 204 and/or the valve body 202 can be formed from polyolefin (in some examples polyethylene) as described above.

Turning now to Figure 2d, the plunger 204 is shown in the operational flow position (with liquid flow shown by a series of arrows). The lineside connector is still connected to the valve assembly 200 and the primary seal portion 216 of the plunger 204 is disengaged from the valve body 202 such that liquid can flow through the internal opening 214. In addition, the pressure of fluid in the pipework that is connected to the valve assembly 200 is reduced such that it is lower than the pressure of fluid in the bag. For instance, a vacuum can be applied to the lineside connector to cause a pressure differential across the valve assembly 200. This change in pressure is provided in response to a request to extract liquid from the bag to which the valve assembly 200 is connected.

The pressure differential across the valve assembly 200 acts to deform the secondary radial seal portion 217 such that at least a portion of the secondary radial seal portion 217 disengages or moves away from the cylindrical wall 206 creating a gap between the plunger 204 and the valve body 202, thereby enabling liquid to flow past the secondary radial seal portion 217. In this way, the plunger 204 is maintained in the operational flow position by the pressure differential across the valve assembly 200 and fluid can flow through the valve assembly: past the secondary radial seal portion 217 and through the internal opening 214.

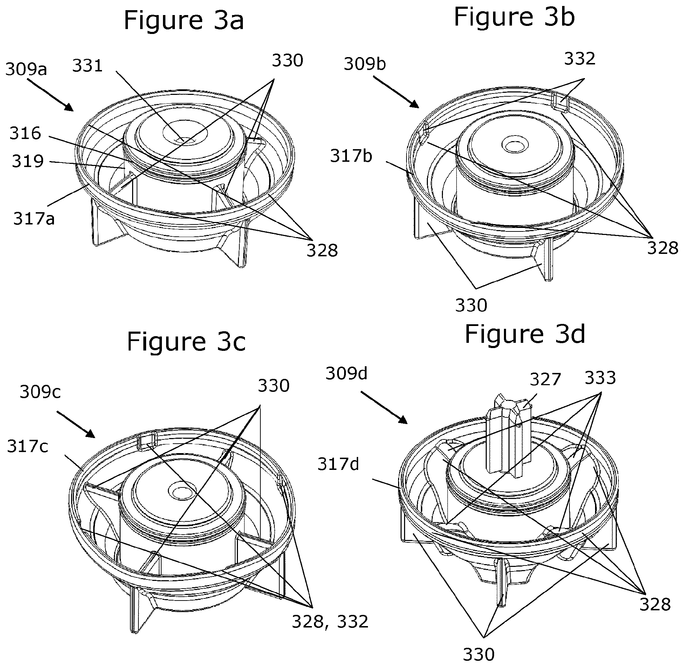

Figures 3a to 3d illustrate perspective views of example sealing portions 309a, 309b, 309c, 309d. Figure 3a and 3b respectively illustrate first and second example sealing portions 309a, 309b in an undeformed state. Figure 3c illustrates a third example sealing portion 309c in a deformed state resulting from an applied pressure differential. Figure 3d illustrates a fourth example sealing portion 309d.

In this example, each sealing portion 309a, 309b, 309c, 309d comprises a cylindrical central region 319 having a radial primary seal portion 316 as described above. A distal end surface of the cylindrical central portion 319 includes an axial aperture 331 for coupling to the stem 327 of the plunger.

In each of the examples of Figures 3a to 3d, the secondary radial seal portion 317a, 317b, 317c, 317d includes an axially-aligned truncated conical structure as described above. The truncated conical structure is arranged such that a truncated apex of the truncated conical structure is closer to the proximal end of the plunger than the base of the truncated conical structure. In other words, the direction of flow of the valve assembly is from the truncated apex to the base, i.e. the base is downstream from the truncated apex. The truncated conical structure can advantageously enable the forces from the pressure differential to act to collapse a circumferential edge of the secondary radial seal under pressure. This is because the forces act (roughly) perpendicular to the conical surface of the secondary radial seal portion 317a, 317b, 317c, 317d, as illustrated by arrows 234 in Figure 2d. In this example, the curved portion of the truncated conical structure is slightly concave with a concave side facing the proximal end of the valve assembly 200 to further aid deformation.

In each of the examples of Figures 3a to 3d, the secondary radial seal portion 317a, 317b, 317c, 317d comprises at least one preferential deformation region 328. The at least one preferential deformation region 328 is a region of the secondary radial seal 317a, 317b, 317c, 317d that has a relative weakness and will preferentially deform in response to an applied force (such as the applied pressure differential) relative to other regions (of relative strength) of the secondary radial seal 317a, 317b, 317c, 317d. The at least one preferential deformation region 328 can include a circumferential edge portion of the secondary radial seal portion 217 that deforms to a non-circular profile. As a result, when the pressure differential is applied across the valve assembly, the circumferential edge portion of the at least one preferential deformation region 328 can disengage from the cylindrical wall enabling fluid flow past the secondary radial seal portion 317a, 317b, 317c, 317d.

In the example of Figure 3a, the secondary radial seal portion 317a comprises a plurality of radially-extending ribs 330. Each rib 330 extends radially from the central cylindrical portion 319 of the sealing portion 309a to a circumferential edge of the secondary radial seal portion 317a. In this example, each rib 330 is provided on both (proximal and distal) sides of the truncated conical structure of the secondary radial seal portion 317a. The ribs 330 provide reinforcement to the truncated conical structure and define regions of relative strength of the secondary radial seal portion 317a as regions adjacent to the ribs 330. The ribs 330 also define preferential deformation regions 328 as regions of the secondary radial seal portion 317a as regions between or furthest from the ribs 330.

Figure 3b illustrates a second example sealing portion 309b with a secondary radial seal portion 317b comprising preferential deformation regions 328. In this example, the secondary radial seal portion 317b comprises a plurality of grooves or notches 332 spaced along the circumferential edge of the secondary radial seal portion 317b to define the preferential deformation regions 328. The grooves 332 are provided as a thinning of a lip extending around the circumferential edge of the secondary radial seal portion 317b. The grooves 332 provide relatively weak regions of the circumferential edge that will preferentially deform relative to the intervening regions. In this example, the secondary radial seal portion 317b also comprises a plurality of radially extending ribs 330 extending from the central cylindrical portion 319 to the circumferential edge. In this example, the ribs are only provided on the proximal side of the secondary radial seal portion 317b (i.e. the side closer to the proximal end of the plunger). The ribs 330 are arranged at regions of relative strength and are equidistant between successive grooves 332.

Figure 3c illustrates a simulation of a third example sealing portion 309c in the presence of a pressure differential. The third example sealing portion 309c includes a combination of the ribs 330 of the first example sealing portion 309a and the grooves 332 of the second example sealing portion 309b. The pressure differential is applied in the axial direction with a lower pressure at the distal end of the sealing portion 309a. The secondary radial seal portion 317c has deformed from a circular profile to a square profile as the preferential deformation regions 328 including the grooves 332 have deformed to a non-circular profile while the radially extending ribs 330 have maintained the profile of the secondary radial seal portion 317c at the regions of relative strength adjacent to the ribs 330.

Figure 3d illustrates a fourth example sealing portion 309d with a secondary radial seal portion 317d comprising preferential deformation regions 328. In this example, the secondary radial seal portion 317d again comprises a plurality of radially extending ribs 330 on the proximal side of the secondary radial seal portion 317d in the same way as the example of Figure 3b. In this example, the secondary radial seal portion 317d also includes a plurality of radially extending inverted curvature portions 333 extending from central cylindrical portion 319 to the circumferential edge and positioned equidistant between successive ribs 330. The inverted curvature portions 333 have a convex shape on the distal side of the secondary radial seal portion 317d (i.e. the side closer to the proximal end of the plunger) and a concave shape on the proximal side of the secondary radial seal portion 317d. In this way, the inverted curvature portions 333 define the preferential deformation regions 328 because these regions will preferentially collapse when a pressure differential is applied with a lower pressure on the distal end of the plunger / distal side of the secondary radial seal portion 317d.

Returning to Figure 2d it can be understood how the secondary radial seal portions 217 of the example sealing portions of Figure 3 would deform when the pressure differential is applied across the valve assembly 200 (e.g. when a vacuum applied via the lineside connector) to allow fluid flow past the secondary radial seal portion 217.

When the pressure differential is removed, the secondary radial seal portion 217 can return to its undeformed circular profile (as illustrated in Figures 3a, 3b and 3d). As a result, the secondary radial seal portion 217 re-engages with, or compresses against, the internal surface of the cylindrical wall 206 to inhibit fluid flow past the secondary radial seal portion 217. In other words, the plunger 204 / valve assembly 200 returns to the operational seal position illustrated in Figure 2c. The plunger 204 is put in this position when sufficient liquid has been extracted from the bag and fluid flow through the valve assembly 200 is no longer required.

This reseal position of the plunger 204 /assembly 200 (when the pressure differential is removed) is the same as the operational seal position: the primary seal portion 216 of the plunger 204 remains spaced apart and disengaged from the mechanical detent portion 208 such that fluid can flow through the internal opening 214; and the secondary radial seal portion 217 of the plunger 204 is fully engaged around the inner surface of the cylindrical wall 206 to inhibit flow past the secondary radial seal portion 217.

In many applications, fluid will only be drawn through the valve assembly 200 intermittently and for short periods of time. In examples where the bag contains a concentrated syrup for soft drinks, a typical use case would be for syrup to be drawn 20ml at a time over the duration of perhaps a second. Furthermore, there can be a relatively long time between successive dispenses of liquid - for instance when the establishment is closed overnight or on a weekend. In which case, the valve assembly 200 of Figure 2 is particularly advantageous because the plunger 204 and in particular the secondary radial seal portion 217 is under maximum stress (when the secondary radial seal 217 is deformed in the operational flow position of Figure 2d) for relatively short periods of time. This is advantageous because it can extend the lifetime of the valve assembly 200.

In this way, the valve assembly 200 and particularly the secondary fluid seal provided by the secondary radial seal portion 217 and the internal surface of the cylindrical wall 206, is by default closed. Furthermore, the valve assembly 200 / secondary fluid seal is one way because it can only open when a pressure differential is applied which will act to draw the fluid in a distal direction only. When the secondary fluid seal is subjected to a vacuum (with the lineside attached) it opens to allow product flow, but is closed on removal of the vacuum. Furthermore, the design of Figure 2 is advantageous in that the secondary fluid seal (which is closed when the plunger is in the operational seal position) is further from the (potentially relatively dirty) pipework that is attached to the valve assembly 200, and therefore isolates more of the liquid in the bag from contamination by the pipework.

Staying with Figure 2c, when the lineside connector is disconnected, the plunger 204 remains in the operational seal position, with the primary seal portion 216 disengaged from the mechanical detent portion 208, because there is no distal force to return it towards the transit seal position. In some examples, the plunger 204 may remain in the operational seal position because the primary seal portion 216 is engaged with the second mechanical detent portion 226-3. The secondary radial seal portion 217 remains engaged and compressed against the internal surface of the cylindrical wall 206 and the secondary fluid seal remains closed, as described above.

In many applications a lineside connector is very rarely disconnected from and then reconnected to a valve assembly. This is because the lineside connector is usually only disconnected from a valve assembly when the associated bag is empty of liquid. In which case, it can be perfectly adequate for there to be a fluid flow path through the internal opening 214 after the lineside is connected as long as there is no fluid flow path past the secondary radial seal portion 217.

Beneficially, the primary seal portion 216 and corresponding mechanical detent portion 208 (that is closed in the transit seal position - see Figure 2b) can rely on the initial assembly and an interference fit to create the primary fluid seal. The secondary radial seal portion 217 of the plunger 204 also provides the secondary fluid seal in the transit seal position. Once the lineside is engaged, the plunger 204 is moved to the operational position (Figures 2c and 2d) such that the plunger 204 is mechanically moved to a second position, in which all the sealing is performed due to the compression of the secondary radial seal portion 217 against the internal surface of the cylindrical wall 206. Advantageously, the secondary fluid seal is only opened for very short periods (and by a small amount) to put the plunger 204 in the operational flow position when fluid is required to be dispensed, and so the secondary radial seal portion 217, and plunger 204 more generally, is operating with minimal stress / compression /deformation for the majority of its operational lifetime.

The disclosed valve assemblies 200 move from the transport seal position to the operational position when the lineside is attached. The operational seal is provided by a flexible radial seal (the secondary fluid seal) that deforms under vacuum to allow product flow and returns to its original shape to prevent backflow when pressure is removed.

Throughout the present specification, the descriptors relating to relative orientation and position, such as "horizontal", "vertical", "top", "bottom" and "side", are used in the sense of the orientation of the valve assembly as presented in the drawings. However, such descriptors are not intended to be in any way limiting to an intended use of the described or claimed invention.

It will be appreciated that any reference to "close to", "before", "shortly before", "after" "shortly after", "higher than", or "lower than", etc, can refer to the parameter in question being less than or greater than a threshold value, or between two threshold values, depending upon the context.

## Claims

1. A valve assembly (200) comprising a valve body (202) and a plunger (204), wherein:
the valve body (202) comprises a cylindrical wall (206) and an internal opening (214) comprising a mechanical detent portion (208);
the plunger (204) comprises:
a primary seal portion (216) for engaging with the mechanical detent portion (208) to occlude the internal opening (214); and
a secondary radial seal portion (217) for engaging around an inner surface of the cylindrical wall (206),
wherein the plunger (204) comprises the following operational positions with respect to the valve body (202):
a transit seal position in which:
the primary seal portion (216) of the plunger (204) is engaged with the mechanical detent portion (208) to occlude the internal opening (214); and an operational position in which:
the primary seal portion (216) of the plunger (204) is disengaged from the mechanical detent portion (208) such that fluid can flow through the internal opening (214); **characterized in that**
the secondary radial seal portion (217) is configured to switch between:
an operational seal position in which the secondary radial seal portion (217) is engaged around the inner surface of the cylindrical wall (206); and
an operational flow position in which the secondary radial seal portion (217) is at least partially disengaged from the inner surface of the cylindrical wall (206) enabling fluid flow past the secondary radial seal portion.

2. The valve assembly (200) of claim 1, wherein the secondary radial seal portion (217) is configured to switch from the operational seal position to the operational flow position in response to a pressure differential applied across the valve assembly.

3. The valve assembly (200) of claim 1 or claim 2, wherein the cylindrical wall (206) is an outer wall of the valve body (202).

4. The valve assembly (200) of any preceding claim, wherein the secondary radial seal portion (217) is configured to deform to provide the operational flow position.

5. The valve assembly (200) of any preceding claim, wherein the secondary radial seal portion (217) comprises one or more preferential deformation regions (328).

6. The valve assembly (200) of claim 5, wherein the secondary radial seal portion (217) comprises a plurality of radially extending ribs (330) and the one or more preferential deformation regions (328) comprise regions between the radially extending ribs.

7. The valve assembly (200) of claim 5 or claim 6, wherein the one or more preferential deformation regions (328) comprise one or more corresponding grooves (332) at a circumferential edge of the secondary radial seal portion (217).

8. The valve assembly (200) of any preceding claim wherein a diameter of the secondary radial seal portion (217) is greater than an internal diameter of the cylindrical wall (206), when the secondary radial seal portion is in a relaxed state.

9. The valve assembly (200) of any preceding claim, wherein the secondary radial seal portion (217) is configured to compress against the internal surface of the cylindrical wall (206).

10. The valve assembly (200) of any preceding claim, wherein the valve assembly is arranged for fluid flow from a proximal end of the valve assembly to a distal end of the valve assembly, and wherein the secondary radial seal portion (217) comprises an axially aligned truncated conical structure having a base defining a circumferential edge of the secondary radial seal portion that tapers towards a truncated apex, wherein the truncated conical structure is arranged with the truncated apex closer to the proximal end of the valve assembly than the base.

11. The valve assembly (200) of any preceding claim, wherein the valve body (202) comprises a boss for locating the plunger, wherein the boss comprises an axially extending internal wall (210) comprising the mechanical detent portion (208).

12. The valve assembly (200) of claim 11, wherein the mechanical detent portion (208) comprises a rib extending radially inwards from the internal wall (210) to define the internal opening (214).

13. The valve assembly (200) of claim 11 or claim 12, wherein the plunger (204) comprises an axially extending central cylindrical portion (219) for locating within the axially extending internal wall (210) and wherein the primary seal portion (216) comprises a radial seal portion on a cylindrical surface of the central cylindrical portion.

14. The valve assembly (200) of any preceding claim, wherein the valve assembly comprises a boss for locating the plunger (204) and the boss comprises one or more mechanical stop features (226) for limiting an axial movement of the plunger.

15. The valve assembly (200) of any preceding claim, wherein the plunger (204) is configured to move from the transit seal position to the operational position in response to an axial force being applied to the plunger.

## Patentansprüche

1. Ventilbaugruppe (200) mit einem Ventilkörper (202) und einem Kolben (204), wobei:
der Ventilkörper (202) eine zylindrische Wand (206) und eine Innenöffnung (214) umfasst, die einen mechanischen Rastabschnitt (208) aufweist;
der Kolben (204) umfasst:
einen primären Dichtungsabschnitt (216) zum Eingriff mit dem mechanischen Rastabschnitt (208), um die Innenöffnung (214) zu verschließen; und
einen sekundären radialen Dichtungsabschnitt (217) zum Eingriff um eine Innenfläche der zylindrischen Wand (206) herum,
wobei der Kolben (204) die folgenden Betriebspositionen im Hinblick auf den Ventilkörper (202) umfasst:
eine Transitdichtungsposition, in der:
der primäre Dichtungsabschnitt (216) des Kolbens (204) mit dem mechanischen Rastabschnitt (208) in Eingriff steht, um die Innenöffnung (214) zu verschließen; und
eine Betriebsposition, in der:
der primäre Dichtungsabschnitt (216) des Kolbens (204) vom mechanischen Rastabschnitt (208) gelöst ist, so dass Fluid durch die Innenöffnung (214) fließen kann; **dadurch gekennzeichnet, dass**
der sekundäre radiale Dichtungsabschnitt (217) konfiguriert ist, um umzuschalten zwischen:
einer Betriebsdichtungsposition, in der der sekundäre radiale Dichtungsabschnitt (217) um die Innenfläche der zylindrischen Wand (206) herum in Eingriff steht; und
einer Betriebsströmungsposition, in der der sekundäre radiale Dichtungsabschnitt (217) zumindest teilweise von der Innenfläche der zylindrischen Wand (206) gelöst ist, wodurch Fluid am sekundären radialen Dichtungsabschnitt vorbeiströmen kann.

2. Ventilbaugruppe (200) nach Anspruch 1, wobei der sekundäre radiale Dichtungsabschnitt (217) so konfiguriert ist, dass er als Reaktion auf einen über die Ventilbaugruppe ausgeübten Druckunterschied von der Betriebsdichtungsposition in die Betriebsströmungsposition wechselt.

3. Ventilbaugruppe (200) nach Anspruch 1 oder Anspruch 2, wobei die zylindrische Wand (206) eine Außenwand des Ventilkörpers (202) ist.

4. Ventilbaugruppe (200) nach einem der vorstehenden Ansprüche, wobei der sekundäre radiale Dichtungsabschnitt (217) so konfiguriert ist, dass er sich verformt, um die Betriebsströmungsposition bereitzustellen.

5. Ventilbaugruppe (200) nach einem der vorstehenden Ansprüche, wobei der sekundäre radiale Dichtungsabschnitt (217) einen oder mehrere bevorzugte Verformungsbereiche (328) umfasst.

6. Ventilbaugruppe (200) nach Anspruch 5, wobei der sekundäre radiale Dichtungsabschnitt (217) eine Vielzahl von sich radial erstreckenden Rippen (330) umfasst und der eine oder die mehreren bevorzugten Verformungsbereiche (328) Bereiche zwischen den sich radial erstreckenden Rippen umfassen.

7. Ventilbaugruppe (200) nach Anspruch 5 oder Anspruch 6, wobei der eine oder die mehreren bevorzugten Verformungsbereiche (328) eine oder mehrere korrespondierende Nuten (332) an einem Umfangsrand des sekundären radialen Dichtungsabschnitts (217) umfassen.

8. Ventilbaugruppe (200) nach einem der vorstehenden Ansprüche, wobei ein Durchmesser des sekundären radialen Dichtungsabschnitts (217) größer ist als ein Innendurchmesser der zylindrischen Wand (206), wenn sich der sekundäre radiale Dichtungsabschnitt in einem entspannten Zustand befindet.

9. Ventilbaugruppe (200) nach einem der vorstehenden Ansprüche, wobei der sekundäre radiale Dichtungsabschnitt (217) so konfiguriert ist, dass er gegen die Innenfläche der zylindrischen Wand (206) gedrückt wird.

10. Ventilbaugruppe (200) nach einem der vorstehenden Ansprüche, wobei die Ventilbaugruppe für einen Fluidstrom von einem proximalen Ende der Ventilbaugruppe zu einem distalen Ende der Ventilbaugruppe angeordnet ist und wobei der sekundäre radiale Dichtungsabschnitt (217) eine axial ausgerichtete kegelstumpfförmige Struktur mit einer Basis umfasst, die einen Umfangsrand des sekundären radialen Dichtungsabschnitts definiert, der sich zu einer abgestumpften Spitze hin verjüngt, wobei die kegelstumpfförmige Struktur so angeordnet ist, dass die abgestumpfte Spitze näher am proximalen Ende der Ventilbaugruppe liegt als die Basis.

11. Ventilbaugruppe (200) nach einem der vorstehenden Ansprüche, wobei der Ventilkörper (202) einen Vorsprung zum Positionieren des Kolbens umfasst, wobei der Vorsprung eine sich axial erstreckende Innenwand (210) umfasst, die den mechanischen Rastabschnitt (208) umfasst.

12. Ventilbaugruppe (200) nach Anspruch 11, wobei der mechanische Rastabschnitt (208) eine Rippe umfasst, die sich von der Innenwand (210) radial nach innen erstreckt, um die Innenöffnung (214) zu definieren.

13. Ventilbaugruppe (200) nach Anspruch 11 oder Anspruch 12, wobei der Kolben (204) einen sich axial erstreckenden zentralen zylindrischen Abschnitt (219) zum Positionieren innerhalb der sich axial erstreckenden Innenwand (210) umfasst und wobei der primäre Dichtungsabschnitt (216) einen radialen Dichtungsabschnitt auf einer zylindrischen Oberfläche des zentralen zylindrischen Abschnitts umfasst.

14. Ventilbaugruppe (200) nach einem der vorstehenden Ansprüche, wobei die Ventilbaugruppe einen Vorsprung zum Anordnen des Kolbens (204) umfasst und der Vorsprung ein oder mehrere mechanische Anschlagmerkmale (226) zum Begrenzen einer axialen Bewegung des Kolbens umfasst.

15. Ventilbaugruppe (200) nach einem der vorstehenden Ansprüche, wobei der Kolben (204) so konfiguriert ist, dass er als Reaktion auf eine auf den Kolben ausgeübte Axialkraft von der Transitdichtungsposition in die Betriebsposition bewegt wird.

## Revendications

1. Ensemble vanne (200) comprenant un corps de vanne (202) et un piston (204), dans lequel :
le corps de vanne (202) comprend une paroi cylindrique (206) et une ouverture interne (214) comprenant une partie de cran mécanique (208) ;
le piston (204) comprend :
une partie de joint primaire (216) destinée à venir en prise avec la partie de cran mécanique (208) pour obturer l'ouverture interne (214) ; et
une partie de joint radial secondaire (217) destinée à venir en prise autour d'une surface intérieure de la paroi cylindrique (206), dans lequel le piston (204) comprend les positions opérationnelles suivantes par rapport au corps de vanne (202) :
une position de joint de transit dans laquelle :
la partie de joint primaire (216) du piston (204) vient en prise avec la partie de cran mécanique (208) pour obturer l'ouverture interne (214) ; et une position opérationnelle dans laquelle :
la partie de joint primaire (216) du piston (204) est désengagée de la partie de cran mécanique (208) de sorte que le fluide peut s'écouler à travers l'ouverture interne (214) ; **caractérisé en ce que**
la partie de joint radial secondaire (217) est configurée pour commuter entre :
une position de joint opérationnelle dans laquelle la partie de joint radial secondaire (217) vient en prise autour de la surface intérieure de la paroi cylindrique (206) ; et
une position d'écoulement opérationnelle dans laquelle la partie de joint radial secondaire (217) est au moins partiellement désengagée de la surface intérieure de la paroi cylindrique (206) permettant l'écoulement de fluide au-delà de la partie de joint radial secondaire.

2. Ensemble vanne (200) selon la revendication 1, dans lequel la partie de joint radial secondaire (217) est configurée pour commuter de la position de joint opérationnelle à la position d'écoulement opérationnelle en réponse à un différentiel de pression appliqué à travers l'ensemble vanne.

3. Ensemble vanne (200) selon la revendication 1 ou la revendication 2, dans lequel la paroi cylindrique (206) est une paroi extérieure du corps de vanne (202).

4. Ensemble vanne (200) selon une quelconque revendication précédente, dans lequel la partie de joint radial secondaire (217) est configurée pour se déformer afin de fournir la position d'écoulement opérationnelle.

5. Ensemble vanne (200) selon une quelconque revendication précédente, dans lequel la partie de joint radial secondaire (217) comprend une ou plusieurs régions de déformation préférentielles (328).

6. Ensemble vanne (200) selon la revendication 5, dans lequel la partie de joint radial secondaire (217) comprend une pluralité de nervures s'étendant radialement (330) et les une ou plusieurs régions de déformation préférentielles (328) comprennent des régions entre les nervures s'étendant radialement.

7. Ensemble vanne (200) selon la revendication 5 ou la revendication 6, dans lequel les une ou plusieurs régions de déformation préférentielles (328) comprennent une ou plusieurs rainures correspondantes (332) au niveau d'un bord circonférentiel de la partie de joint radial secondaire (217).

8. Ensemble vanne (200) selon une quelconque revendication précédente, dans lequel un diamètre de la partie de joint radial secondaire (217) est supérieur à un diamètre interne de la paroi cylindrique (206), lorsque la partie de joint radial secondaire est dans un état relâché.

9. Ensemble vanne (200) selon une quelconque revendication précédente, dans lequel la partie de joint radial secondaire (217) est configurée pour se comprimer contre la surface interne de la paroi cylindrique (206).

10. Ensemble vanne (200) selon une quelconque revendication précédente, dans lequel l'ensemble vanne est agencé pour que du fluide s'écoule d'une extrémité proximale de l'ensemble vanne vers une extrémité distale de l'ensemble vanne, et dans lequel la partie de joint radial secondaire (217) comprend une structure conique tronquée alignée axialement ayant une base définissant un bord circonférentiel de la partie de joint radial secondaire qui s'effile vers un sommet tronqué, dans lequel la structure conique tronquée est agencée avec le sommet tronqué étant plus proche de l'extrémité proximale de l'ensemble vanne que la base.

11. Ensemble vanne (200) selon une quelconque revendication précédente, dans lequel le corps de vanne (202) comprend un bossage pour localiser le piston, dans lequel le bossage comprend une paroi interne s'étendant axialement (210) comprenant la partie de cran mécanique (208).

12. Ensemble vanne (200) selon la revendication 11, dans lequel la partie de cran mécanique (208) comprend une nervure s'étendant radialement vers l'intérieur à partir de la paroi interne (210) pour définir l'ouverture interne (214).

13. Ensemble vanne (200) selon la revendication 11 ou la revendication 12, dans lequel le piston (204) comprend une partie cylindrique centrale s'étendant axialement (219) destinée à se positionner à l'intérieur de la paroi interne s'étendant axialement (210) et dans lequel la partie de joint primaire (216) comprend une partie de joint radial sur une surface cylindrique de la partie cylindrique centrale.

14. Ensemble vanne (200) selon une quelconque revendication précédente, dans lequel l'ensemble vanne comprend un bossage pour positionner le piston (204) et le bossage comprend un ou plusieurs dispositifs d'arrêt mécaniques (226) pour limiter un mouvement axial du piston.

15. Ensemble vanne (200) selon une quelconque revendication précédente, dans lequel le piston (204) est configuré pour passer de la position de joint de transit à la position opérationnelle en réponse à une force axiale étant appliquée au piston.
